Europäisches Patentamt

European Patent Office

Office européen des brevets

(19)

(11) Veröffentlichungsnummer : **0 044 524**
**B1**

(12) **EUROPÄISCHE PATENTSCHRIFT**

(45) Veröffentlichungstag der Patentschrift :
**18.09.85**

(21) Anmeldenummer : **81105572.2**

(22) Anmeldetag : **15.07.81**

(51) Int. Cl.⁴ : **C 12 C    1/18**

(54) Verfahren zur Herstellung eines lagerfähigen Malzauszuges.

(30) Priorität : **18.07.80 DE 3027319**

(43) Veröffentlichungstag der Anmeldung :
**27.01.82 Patentblatt 82/04**

(45) Bekanntmachung des Hinweises auf die Patenterteilung : **18.09.85 Patentblatt 85/38**

(84) Benannte Vertragsstaaten :
**AT FR GB NL**

(56) Entgegenhaltungen :
**DE-A- 3 019 672**
**DE-C-   647 851**
**US-A- 3 852 495**

(73) Patentinhaber : **Alfa-Laval Industrietechnik GmbH**
**Wilhelm-Bergner-Strasse**
**D-2056 Glinde (DE)**

(72) Erfinder : **Krüger, Eckhard, Prof. Dr.-Ing.**
**Remstaler Strasse 38a**
**D-1000 Berlin 28 (DE)**

(74) Vertreter : **Stach, Harald, Dr. Dipl.-Chem. et al**
**Adenauerallee 30**
**D-2000 Hamburg 1 (DE)**

## Beschreibung

Die Erfindung bezieht sich auf ein Verfahren zur Herstellung eines lagerfähigen Malzauszuges gemäß dem Gattungsbegriff des Patentanspruchs.

Die Herstellung von beispielsweise Diät-Bier unter Verwendung eines Malzauszuges verursachte bisher einen relativ großen technischen Aufwand und barg technologische Risiken (Infektionen) in sich. Deshalb schreckten viele Brauereien davor zurück, unter Verwendung eines Malzauszuges entsprechende Biere zu brauen.

Aus der DE-A-23 48 578 ist die Herstellung eines normalen Sudes bekannt, wobei ein Teil der Würze nicht gekocht wird. Infolgedessen erfolgt auch die Herstellung der Maische für den jeweiligen Sud bei 70 °C aus einer Wasser-Malz-Mischung. Außerdem betrifft dieses Verfahren nicht die Herstellung eines lagerfähigen Malzauszuges, sondern die Herstellung eines nachvergorenen Bieres.

Aus der DE-C-647 851 ist es ferner bekannt, einen alkoholischen Diastase-Grünmalzauszug mit Hilfe eines Entkeimungsfilters zu entkeimen. Dabei handelt es sich jedoch um einen unvergorenen Malzauszug.

Der Erfindung liegt diesem Stand der Technik gegenüber die Aufgabe zugrunde, einen lagerfähigen Malzauszug herzustellen.

Die Lösung der gestellten Aufgabe erfolgt durch die kennzeichnenden Merkmale des Patentanspruchs.

Das erfindungsgemäße Verfahren hat den Vorteil, daß eine größere Menge eines lagerfähigen Malzauszuges zur Verfügung steht, so daß über einen längeren Zeitraum, z. B. über ein halbes Jahr hinweg, Bier mit den gleichen Eigenschaften hergestellt werden kann. Dadurch ist das Problem vermieden, welches sich im Stand der Technik daraus ergab, daß für die verschiedenen Sude verschiedene Malzauszüge unterschiedlicher Zusammensetzung verwendet werden mußten. Da der Malzauszug keimfrei ist, entfällt auch die Notwendigkeit der Pasteurisierung, die bisher für mit Malzauszug behandelte Biere üblich war. Mit dem Wegfall der Pasteurisierung entfällt wiederum eine Geschmacksbeeinträchtigung des Bieres. Diese wirkte sich im Stand der Technik gerade bei den hier in Rede stehenden Bieren, nämlich bei Leicht-Bieren und Diät-Bieren, verstärkt aus. Ferner wird die Bierfarbe nicht verändert. Schließlich bietet das erfindungsgemäße Verfahren die Möglichkeit, in einfacher Weise die Hydrolyse der Dextrine mittels Zugabe eines Malzauszuges derart zu steuern, daß sowohl der Markt für Leicht-Biere als auch derjenige für Diät-Biere gemeinschaftlich erfaßt werden kann, was die Wirtschaftlichkeit des Brauprozesses verbessert.

Hierzu trägt auch die Steuerbarkeit der Hydrolyse der Dextrine bei, mit welcher eine Verkürzung des Verfahrens erzielt werden kann. Die Anwesenheit der kohlenhydratabbauenden Enzyme bewirkt nach der Abfüllung des Bieres einen weiteren Abbau der Dextrine zu überwiegend Maltose. Dadurch wird die Vollmundigkeit des Bieres positiv beeinflußt, weil im Vergleich zu den abgebauten Dextrinen die gebildete Maltose sensorisch doppelt stark wirkt. Die Anwesenheit von Maltose wiederum führt infolge ihres Reduktionsvermögens zu einer Geschmacksstabilisierung.

## Patentanspruch

Verfahren zur Herstellung eines lagerfähigen Malzauszugs zur Verwendung als Enzympotential bei der Bierbereitung, wobei enzymhaltiges Malz bei 30 bis 65° gemaischt und der enthaltene Malzauszug abgezogen wird, dadurch gekennzeichnet, daß der so gewonnene Malzauszug mit Bierhefe vergoren und der endvergorene Malzauszug von Trübstoffen und Hefe befreit und anschließend einer Entkeimungs-Filtration unterworfen wird.

## Claim

A method for producing a storable malt extract for use as enzyme source in beer brewing, wherein enzyme-containing malt is mashed at 30 to 65 °C and the resulting malt extract is withdrawn, characterized in that the malt extract thus obtained is fermented with brewer's yeast and the end-fermented malt extract is freed from sediment and yeast and subsequently subjected to a sterilizing filtration.

## Revendication

Procédé pour fabriquer un extrait de malt supportant bien le stockage, en vue de son utilisation comme support d'enzyme lors de la préparation de la bière, du malt contenant de l'enzyme étant trempé à 30 à 65° et l'extrait de malt contenu étant soutiré, caractérisé en ce que l'extrait de malt ainsi obtenu est fermenté avec de la levure de bière et l'extrait de malt une fois fermenté est libéré de matières troubles et de levure et est ensuite soumis à une filtration stérilisatrice.